# EUROPEAN PATENT APPLICATION

(11) **EP 1 686 407 A1**
(43) Date of publication of application: **02.08.2006**
(21) Application number: 06001116.0
(22) Date of filing: 19.01.2006
(51) Int. Cl.: G02B 21/06

(54) **Confocal laser scanning microscope with exchangeable optical source and detector connection unit**

(30) Priority: 27.01.2005 JP 2005019896
(71) Applicant: Olympus Corporation, Tokyo 151-0072 (JP)
(72) Inventor: Natori, Yasuaki, Hachioji-shi Tokyo 193-0816 (JP); Kawasaki, Kenji, Hachioji-shi Tokyo 192-0023 (JP); Karaki, Kenji, Ina-shi Nagano 396-0011 (JP); Kawano, Yoshihiro, Hachioji-shi Tokyo 192-0916 (JP)
(74) Representative: von Hellfeld, Axel

(57) **Abstract**

When exchanging a dichroic mirror (27) to detect fluorescence of a different wavelength, it is unnecessary to carry out precise positional adjustment, particularly in a compact examination apparatus, and the dichroic mirror (27) can be easily exchanged. The invention provides a connection unit including a light-source optical fiber (7), removably connected to the light source (3), for conveying the excitation light from the light source (3); a collimator lens (24) for collimating the excitation light emitted from the light-source optical fiber (7) to introduce the excitation light to the optical scanning section (17); and a dichroic mirror (27) for splitting off fluorescence, which is generated in the sample and which returns via the objective lens (20) and the optical scanning section (17), from a light path of the excitation light and for directing the fluorescence to a photodetector (15). The light-source optical fiber (7), the collimator lens (24), and the dichroic mirror (27) are secured to each other such that optical axes thereof are aligned.

## Description

### BACKGROUND OF THE INVENTION

### 1. FIELD OF THE INVENTION

The present invention relates to a connection unit and to an optical-scanning fluoroscopy apparatus.

### 2. DESCRIPTION OF RELATED ART

A known optical-scanning fluoroscopy apparatus in the related art is, for instance, a scanning confocal microscope (for example, see Japanese Unexamined Patent Application Publication No. 2002-221663).

In order to allow a photodetector to be replaced and to increase the number of image channels, this scanning confocal microscope connects a detection unit having at least one photodetector to a scanning unit provided with an optical scanning section that two-dimensionally scans light from a light source onto a specimen and that scans the light returning from the specimen and directs it to a pinhole. The detection unit can be attached to and detached from the scanning unit by connecting and disconnecting an optical fiber.

A scanning laser microscope in which it is possible to carry out observation by switching between a plurality of laser beams is also known (for example, see Japanese Unexamined Patent Application Publication No. 2003-21784).

This scanning laser microscope includes a laser light source that can emit light by selectively switching between laser beams with a plurality of wavelengths for exciting respective fluorochromes for multiple dye materials which are stained with a plurality of types of fluorochrome, and a turret that can selectively place in the light path a dichroic mirror corresponding to the wavelength of the emitted laser light.

However, although the scanning confocal microscope in Japanese Unexamined Patent Application Publication No. 2002-221663 allows photodetector exchange and can increase the number of image channels, a detector unit including a photodetector is exchanged or installed in this microscope by connecting and disconnecting the tip of an optical fiber in a connection part for connection to the scanning unit. Therefore, the positional relationship between the end face of the optical fiber and optical elements in the scanning unit, for example, focusing lenses and dichroic mirrors, is lost each time the detector unit is exchanged, resulting in the problem that it is essential to carry out positional adjustment each time. In particular, since the core of the optical fiber is extremely small, ordinarily about 5 µm to 50 µm in diameter, it is essential to carry out precise positional adjustment.

Furthermore, in the scanning laser microscope in Japanese Unexamined Patent Application Publication No. 2003-21784, because the dichroic mirror is changed by rotating the turret, some displacement occurs in the scanning position due to angular errors in each dichroic mirror. This can be corrected, however, by determining the resulting amount of displacement in the image using image processing.

In a scanning laser microscope having a design in which the dichroic mirror is sequentially exchanged by rotating the turret to detect fluorescence of different wavelengths, correction based on image processing is also effective. However, if the dichroic mirror is exchanged infrequently or if the scanning examination system is so small that it is difficult to install a turret, there is no need to sequentially perform correction using image processing.

### BRIEF SUMMARY OF THE INVENTION

The present invention has been conceived in light of the circumstances described above, and an object thereof is to provide a connection unit and an optical-scanning fluoroscopy apparatus in which it is not necessary to carry out precise position adjustment when exchanging a dichroic mirror in order to detect fluorescence of a different wavelength. More particularly, it is an object of the present invention to provide a connection unit and an optical-scanning fluoroscopy apparatus in which the dichroic mirror can be easily exchanged, even in a compact fluoroscopy apparatus.

In order to realize the object described above, the present invention provides the following solutions.

In one aspect, the present invention provides a connection unit which is removably attached to an apparatus main body including an optical scanning section for scanning excitation light from a light source and an objective lens for imaging the excitation light scanned by the optical scanning section onto a specimen, the connection unit including a light-source optical fiber, removably connected to the light source, for conveying the excitation light from the light source; a collimator lens for collimating the excitation light emitted from the light-source optical fiber and introducing the excitation light to the optical scanning section; and a dichroic mirror for splitting off fluorescence, which is generated in the sample and which returns via the objective lens and the optical scanning section, from a light path of the excitation light and for directing the fluorescence to a photodetector. The light-source optical fiber, the collimator lens, and the dichroic mirror are secured to each other such that optical axes thereof are aligned.

Since the connection unit according to the present invention is provided such that it can be attached to and removed from the apparatus main body, attaching it to the apparatus main allows excitation light from the light source to be conveyed to the apparatus main body via the light-source optical fiber. The excitation light conveyed via the light-source optical fiber is transmitted through the collimator lens, where it is collimated, travels via the dichroic mirror, and is introduced into the optical scanning section. Moreover, the fluorescence generated in the specimen and returning via the objective lens and the optical scanning section is split off from the light path of the excitation light by the dichroic mirror and is detected by the photodetector.

In this case, since the light-source fiber, the collimator lens, and the dichroic mirror are secured to each other such that their optical axes are aligned, it is not necessary to carry out precise optical axis adjustment when replacing the connection unit. Furthermore, because attachment and detachment of the connection unit to and from the apparatus main body is carried out in the region between the dichroic mirror and the optical scanning section where the beam is collimated, the positional adjustment in the optical axis direction at this position may be relatively rough. Therefore, by exchanging the connection unit when exchanging the dichroic mirror and so forth, the adjustment procedure can be simplified, the time required can be reduced, and shifting of the operating position can be more effectively prevented.

The aspect of the present invention described above preferably further includes a photodetector optical fiber, removably connected to the photodetector, for conveying the fluorescence split off by the dichroic mirror to the photodetector; and a coupling lens for focusing the fluorescence onto an end face of the photodetector optical fiber. The photodetector optical fiber and the coupling lens are preferably secured to each other such that optical axes thereof are aligned with respect to the dichroic mirror.

With this configuration, the fluorescence that is split off by the dichroic mirror is focused by the coupling lens and is made incident on the end face of the detection optical fiber. Then, the fluorescence is conveyed via the detection optical fiber and is detected by the photodetector.

In such a case, since the detection optical fiber and the coupling lens are fixed with respect to the dichroic mirror such that their optical axes are aligned, the fluorescence that is split off by the dichroic mirror is incident on the end face of the detection optical fiber with no positional displacement and can be detected.

In the aspect of the invention described above, a pinhole may be disposed at a conjugate position with respect to an image position of the objective lens; and the pinhole may be secured to each other such that an optical axis thereof is aligned with respect to the photodetector optical fiber.

By doing so, simply attaching the connection unit to the apparatus main body allows confocal fluorescence images at the image position of the specimen to be obtained without carrying out precise positional adjustment.

In the configuration described above, the photodetector optical fiber is preferably a multimode fiber; and the pinhole diameter of the pinhole is preferably capable of being adjusted.

With this configuration, increasing the pinhole diameter reduces the confocality and thus allows brighter confocal images to be obtained at a greater depth. On the other hand, reducing the pinhole diameter allows the confocality to be improved.

In the aspect of the invention described above, the photodetector optical fiber may include, at the end that is fixed to the photodetector, a connector for enabling attachment and removal of the photodetector optical fiber.

Accordingly, to connect the photodetector optical fiber, it is possible to use a connector for connecting the two end faces of the optical fibers by abutting them. Therefore, it is not necessary to carry out precise adjustment to connect to a photodetector when replacing the dichroic mirror, which allows the procedure to be simplified.

In the aspect of the invention described above, the light-source optical fiber may include, at the end that is fixed to the light source, a connector for enabling attachment and removal of the light-source optical fiber.

Accordingly, to connect the light-source optical fiber, it is possible to use a connector for connecting the two end faces of the optical fibers by abutting them. Therefore, it is not necessary to carry out precise adjustment to connect to a light source when replacing the dichroic mirror, which allows the procedure to be simplified.

In another aspect, the present invention provides an optical-scanning fluoroscopy apparatus including a light source; an apparatus main body including an optical scanning section for scanning excitation light from the light source and an objective lens for imaging the excitation light scanned by the optical scanning section onto a specimen; a photodetector for detecting fluorescence, which is generated in the specimen and which returns via the objective lens and the optical scanning section; and a connection unit according to the aspect of the invention described above, which is removable attached to the apparatus main body.

According to this aspect of the invention, by replacing the connection unit, which can be attached to and detached from the apparatus main body, it is possible to detect fluorescence of various wavelengths using various dichroic mirrors. In such a case, it is not necessary to carry out precise positional adjustment when connecting the connection unit to the apparatus main body, which enables straightforward connection without the need for any special skill.

Therefore, the apparatus main body, which is separated from the light source by the light-source fiber, can be reduced in size and can be disposed at any orientation and position with respect to the specimen. Furthermore, the dichroic mirror can be easily exchanged for detecting fluorescence of various wavelengths.

The present invention provides several advantages. It is possible to enable replacement of the dichroic mirror while keeping the size of the apparatus main body small. In addition, it is not necessary to carry out precise position adjustment when replacing the dichroic mirror, which simplifies the connection procedure.

### BRIEF DESCRIPTION OF THE SEVERAL VIEWS OF THE DRAWINGS

Fig. 1 is a schematic diagram showing the overall configuration of a connection unit and an optical-scanning fluoroscopy apparatus according to a first embodiment of the present invention.
Fig. 2 is a diagram showing the overall configuration when the connection unit is removed from an apparatus main body of the optical-scanning fluoroscopy apparatus in Fig. 1.
Fig. 3 is a diagram showing the overall configuration of a first modification of the connection unit and the optical-scanning fluoroscopy apparatus in Fig. 1.
Fig. 4 is a longitudinal sectional view showing an example of an optical connector used to connect optical fibers in the connection unit shown in Fig. 3.
Fig. 5 is a diagram showing the overall configuration of a second modification of the connection unit and the optical-scanning fluoroscopy apparatus in Fig. 1.
Fig. 6 is a diagram showing the overall configuration of a third modification of the connection unit and the optical-scanning fluoroscopy apparatus in Fig. 1.
Fig. 7 is a diagram showing the overall configuration of a fourth modification of the connection unit and the optical-scanning fluoroscopy apparatus in Fig. 1.

### DETAILED DESCRIPTION OF THE INVENTION

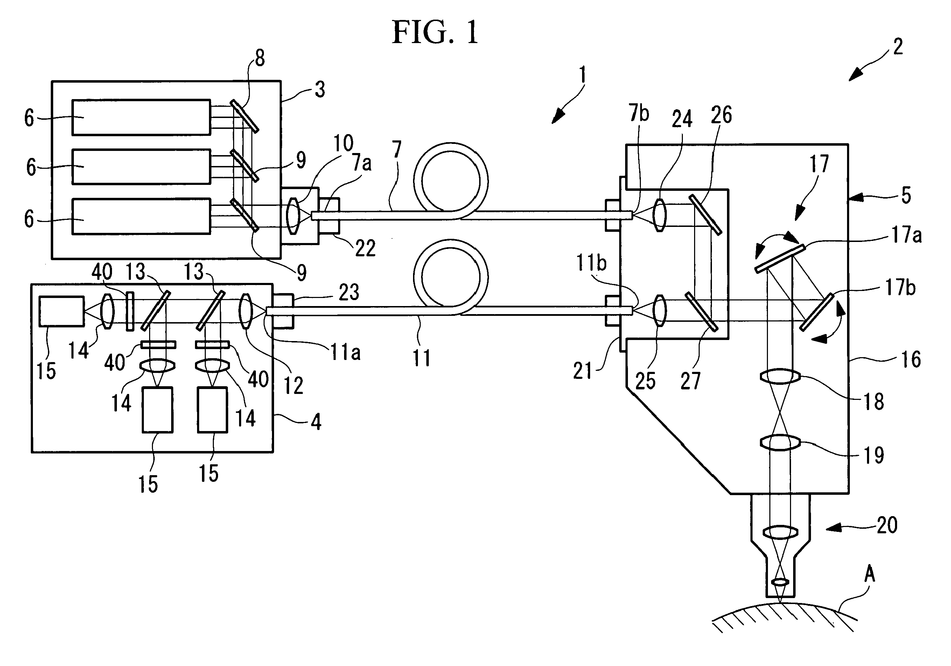

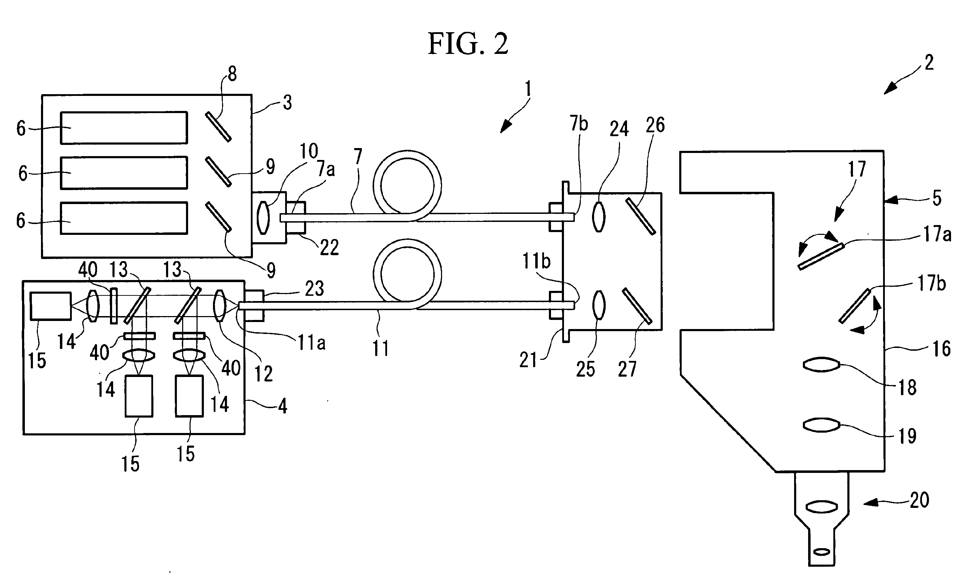

A connection unit 1 and an optical-scanning fluoroscopy apparatus 2 according to a first embodiment of the present invention will be described below with reference to Figs. 1 and 2.

As shown in Fig. 1, the optical-scanning fluoroscopy apparatus 2 according to the present embodiment includes a light-source unit 3, a light-detecting unit 4, an apparatus main body 5, and a connection unit 1 for connecting these components.

The light-source unit 3 includes a plurality of laser light sources 6 with different wavelengths, a mirror 8 for combining the laser beams from these laser light sources 6 and introducing them to a single optical fiber 7, dichroic mirrors 9, and a coupling lens 10.

The light-detecting unit 4 includes a collimator lens 12 for converting fluorescence conveyed via the optical fiber 11 into a collimated beam, a plurality of dichroic mirrors 13 for separating the collimated fluorescence into individual wavelengths, barrier filters 40 for transmitting only a desired fluorescence wavelength range of the fluorescence that is divided into the individual wavelengths, focusing lenses 14 for focusing the fluorescence transmitted through the barrier filters 40, and photodetectors 15 for detecting the focused fluorescence. For example, photomultiplier tubes (PMTs), which are zero-dimensional light-detecting elements, are used as the photodetectors 15.

The apparatus main body 5 includes, inside a casing 16, an optical scanning section 17 for two-dimensionally scanning the laser light coming from the light-source unit 3, a pupil-projection lens 18 for focusing the laser light scanned by the optical scanning section 17 to form an intermediate image, an image-forming lens 19 for collimating the laser light forming the intermediate image, and an objective lens 20 for further focusing the laser light collimated by the image-forming lens 19 to re-image it at a specimen A.

The optical scanning section 17 is formed, for example, of proximity galvanometer mirrors in which two galvanometer mirrors 17a and 17b that oscillate about the two mutually orthogonal axes are disposed opposite each other.

The connection unit 1 includes a first optical fiber 7 that is connected to the light source unit 3, a second optical fiber 11 that is connected to the light-detecting unit 4, and a cassette unit 21 which is removably connected to the casing 16 of the apparatus main body 5. One end 7a of the first optical fiber 7 is removably attached to the light source unit 3 via a connector 22. The other end 7b of the first optical fiber 7 is fixed to the cassette unit 21 of the connection unit 1.

One end 11a of the second optical fiber 11 is removably attached to the light-detecting unit 4 via a connector 23. The other end 11b of the second optical fiber 11 is fixed to the cassette unit 21 of the connection unit 1. The first and second optical fibers 7 and 11 are, for example, single-mode optical fibers having core diameters of about 5 µm.

The cassette unit 21 of the connection unit 1 contains a collimator lens 24 which is disposed opposite the other, fixed end 7b of the first optical fiber 7, a coupling lens 25 which is disposed opposite the other end of the second optical fiber 11, a mirror 26 disposed adjacent to the collimator lens 24, and a dichroic mirror 27 disposed adjacent to the coupling lens 25, which are fixed to each other. The optical fibers 7 and 11, the collimator lens 24, the coupling lens 25, the mirror 26, and the mirror 27 are fixed such that their optical axes are aligned with each other.

By doing so, the laser light conveyed by the first optical fiber 7 is collimated by the collimator lens 24, is reflected by the mirror 26 and the dichroic mirror 27, and enters the optical scanning section 17. On the other hand, by irradiating the specimen A with laser light, the fluorescence generated in the specimen A passes through the objective lens 20, the image-forming lens 19, the pupil-projection lens 18, and the optical scanning section 17, returns to the cassette unit 21 as a collimated beam, and is transmitted through the dichroic mirror 27, where it is split off from the laser beam and is made incident on the other end 11b of the second optical fiber 11 by the coupling lens 25.

The operation of the connection unit 1 and the optical-scanning fluoroscopy apparatus 2 according to the present embodiment, having the above-described configuration, will be described below.

To carry out examination of the specimen A with the optical-scanning fluoroscopy apparatus 2 according to the present embodiment, as shown in Fig. 1, the orientation and position of the apparatus main body 5 are adjusted to position the objective lens 20 opposite an examination site of the specimen A. At this time, since the apparatus main body 5 is separated from the light-source unit 3 and the light-detecting unit 4 by the first and second optical fibers 7 and 11, by bending the optical fibers 7 and 11, the position and orientation can be adjusted relatively freely to dispose the apparatus main body 5 at a position suitable for observing the desired examination site.

In this state, the light-source unit 3, the light-detecting unit 4, and the apparatus main body 5 are operated and laser light is emitted from each laser light source 6 in the optical unit 3. The laser light emitted from the laser light sources 6 is introduced into the first optical fiber 7 by the coupling lens 10. The laser light conveyed inside the first optical fiber 7 enters the cassette unit 21, is collimated by the collimator lens 24, is reflected by the mirror 26 and the dichroic mirror 27, and is emitted from the cassette unit 21 as collimated light.

The laser light emitted from the cassette unit 21 is two-dimensionally scanned by the optical scanning section 17, passes through the pupil-projection lens 18, the image-forming lens 19, and the objective lens 20, and is imaged onto the specimen A. Accordingly, the laser light is moved two-dimensionally over the specimen A, and the fluorescence generated at each point returns via the objective lens 20, the image-forming lens 19, the pupil-projection lens 18, and the optical scanning section 17 and enters the cassette unit 21 as collimated light.

After being separated from the laser light by being transmitted through the dichroic mirror 27, the fluorescence entering the cassette unit 21 is focused onto the other end 11b of the second optical fiber 11 by the coupling lens 25. Then, the fluorescence incident on the second optical fiber 11 propagates in the second optical fiber 11; thereafter, it enters the light-detecting unit 4, is collimated by the collimator lens 12, travels along the paths including the dichroic mirrors 13, the barrier filters 40, and the focusing lenses 14, and is detected by the respective photodetectors 15 for each wavelength.

In the present embodiment, since a single-mode fiber is used as the second optical fiber 11, the end face 11b of the second optical fiber onto which the fluorescence is focused by the coupling lens 25 functions as a confocal pinhole. Therefore, using the photodetectors 15, it is possible to obtain high-resolution confocal fluorescence images.

In such a case, the first and second optical fibers 7 and 11 and the collimator lens 24, the coupling lens 25, the mirror 26, and the dichroic mirror 27 in the cassette unit 21, constituting the connection unit 1, are fixed such that their optical axes are aligned with each other. Therefore, simply by attaching it to the casing 16 of the apparatus main body 5, the laser light from the laser light sources 6 can be made incident at a predetermined position of the specimen A and the fluorescence returning from that position can be correctly detected. In such a case, as with the related art, there is no need to precisely align the first optical fiber 7 with the collimator lens 24 or the second optical fiber 11 with the coupling lens 25; simple positional adjustment is sufficient, which simplifies the attachment and detachment procedures.

Furthermore, as shown in Fig. 2, when exchanging the dichroic mirror 27, the cassette unit 21 is removed from the casing 16 of the apparatus main body 5 and is replaced with another cassette unit 21 containing another dichroic mirror 27 whose optical axis is aligned in the same way. Therefore, as with the related art, movement of the scanning region due to angular errors in the dichroic mirror 27 can be prevented and simple positional adjustment of the cassette unit 21 with respect to the casing 16 is sufficient, thus simplifying the replacement procedure.

Furthermore, with the connection unit 1 and the optical-scanning fluoroscopy apparatus 2 according to the present embodiment, by preparing a connection unit 1, including a dichroic mirror 27 that can split off fluorescence with a wavelength desired to be detected, for each wavelength, replacing the connection unit 1 enables the detection of fluorescence with a desired wavelength. In this case, since it is not necessary to provide a large apparatus like a turret, the apparatus main body 5 can be reduced in size and the handling can be improved.

In such a case, when the connection unit 1 is replaced, it is not necessary to align the optical axes of the light source unit 3 and the first optical fiber 7; however, since the size of the optical unit 3 is not particularly limited, unlike the apparatus main body 5, it is possible to provide an automatic position-adjustment device (not shown in the drawings), which allows the replacement procedure to be simplified. Also, regarding the positional adjustment of the light-detecting unit 4 and the second optical fiber 11, since the photodetectors 15 are photomultiplier tubes, it is sufficient to set the detection position roughly, and precise position adjustment is unnecessary.

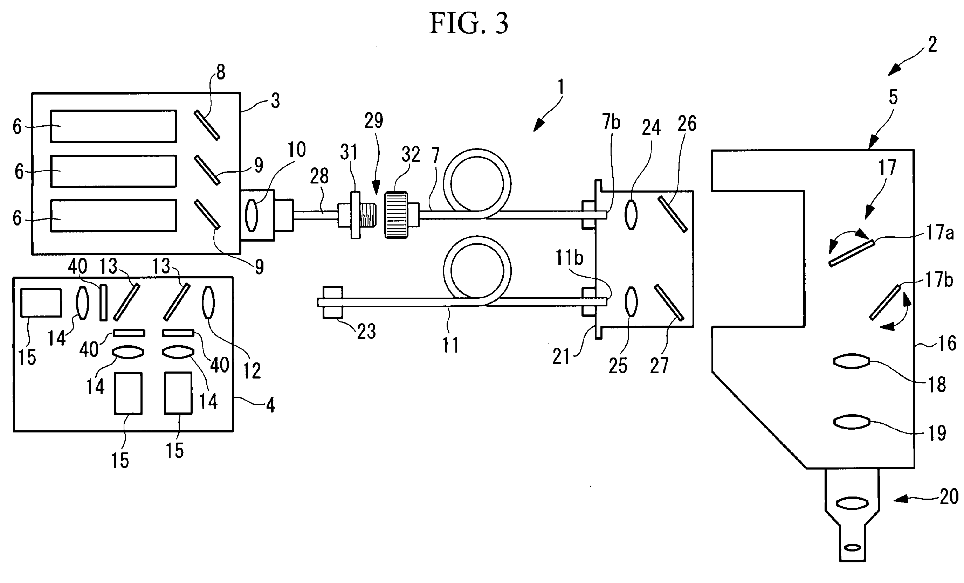

As shown in Fig. 3, an optical fiber 28 may be fixed to the light source unit 3 and the first optical fiber 7 may be connected to the end of this optical fiber 28 via an optical connector 29. In this case, the laser light sources 6, the dichroic mirrors 9, the coupling lens 10, disposed inside the light source unit 3, and the optical fiber 28 should be fixed such that their optical axes are aligned with each other.

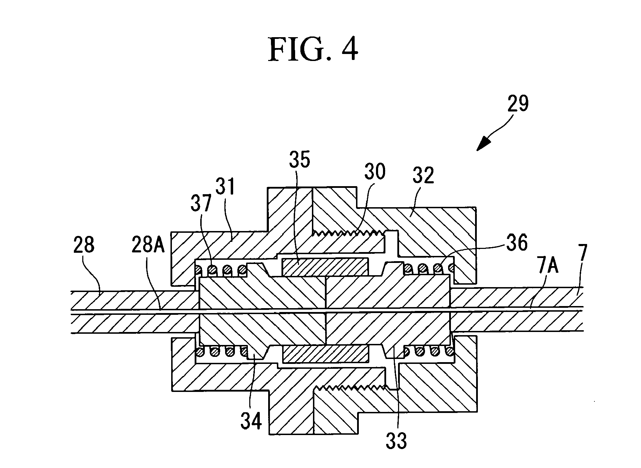

As shown in Fig. 4, the optical connector 29 includes housings 31 and 32 that are joined together with a screw 30; ferrules 33 and 34 that are attached to cores 7A and 28A exposed from the ends of sheaths of the respective optical fibers 7 and 28; coils springs 36 and 37 that exert biasing forces to press the ferrules 33 and 34 together; and a sleeve 35 that is disposed to cover abutting parts of the ferrules 33 and 34.

Connection of the optical fibers 7 and 28 by the optical connector 29 is achieved by positioning them so that the end faces of the optical fibers 7 and 28, which have identical core diameters, abut against each other. The end faces of the optical fiber 7 and 28 are PC polished, for example, which allows laser light emitted from the end face of the optical fiber 28 at one side to efficiently pass over to the other optical fiber 7. On the other hand, by loosening the connection between the housings 31 and 32, it is possible to easily uncouple the two optical fibers 7 and 28. Accordingly, when performing maintenance or replacement of components, the connection unit 1 can be removed from the light source unit 3 simply by loosening the connection between the housings 31 and 32, and during actual use, it can easily be attached simply by connecting the housings 31 and 32.

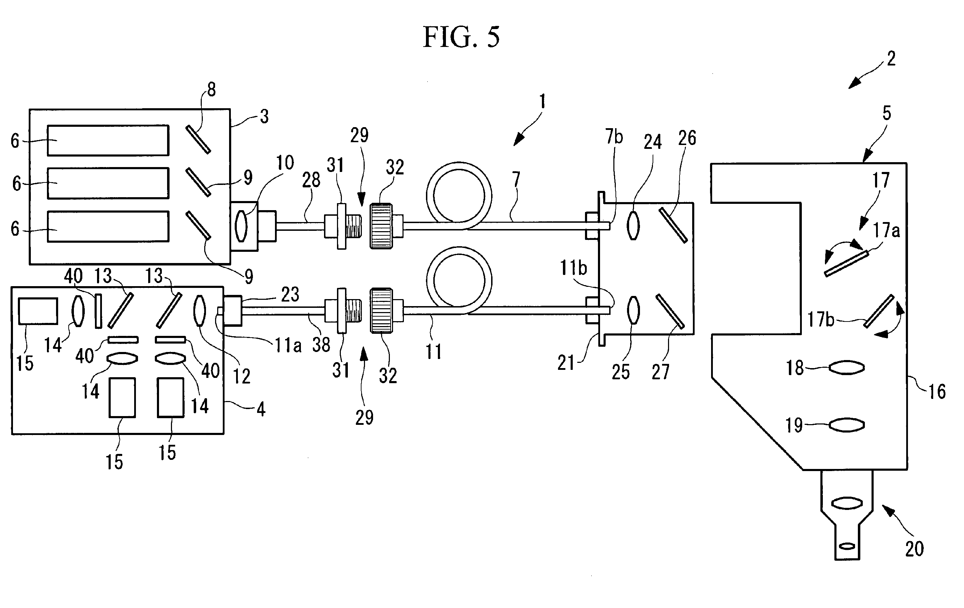

Likewise, this configuration may also be applied to the light-detecting unit 4, as shown in Fig. 5; that is, an optical fiber 38 that is fixed to the light-detecting unit 4 may be provided for connection to the second optical fiber 11 via an optical connector 29.

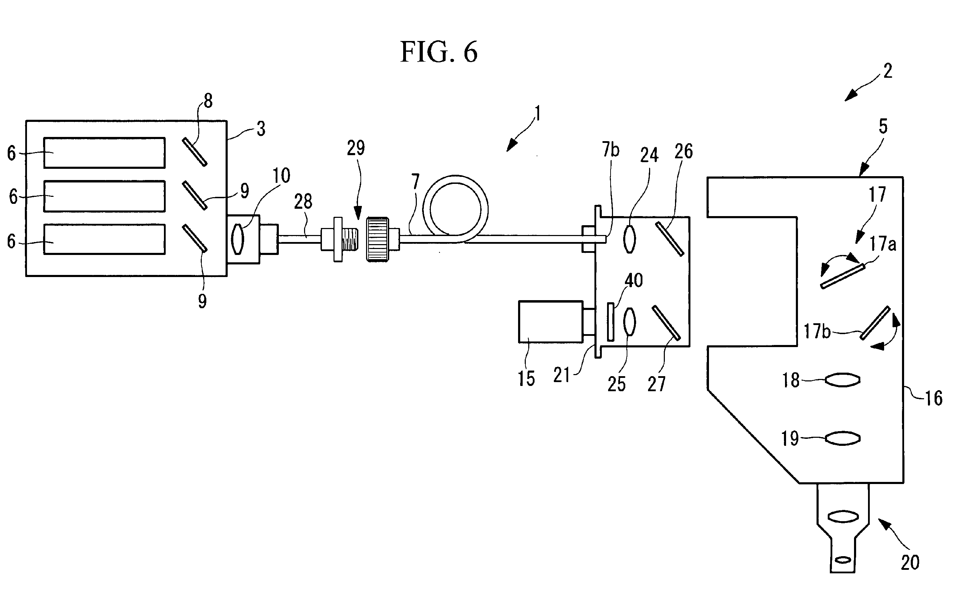

Furthermore, although the embodiment described above has been illustrated by an example in which two optical fibers 7 and 11 connected to the cassette unit 21 are provided as the connection unit 1, instead of this, the light-detecting unit 4 may be designed such that the photodetectors 15 are directly fixed to the cassette unit 21, rather than via the optical fiber 11, as shown in Fig. 6.

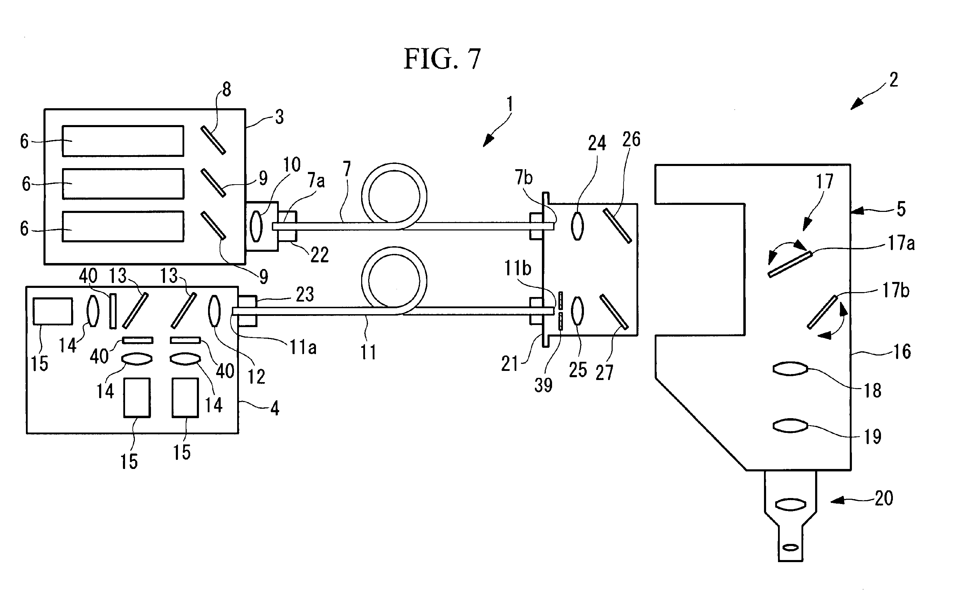

In the embodiment described above, confocal fluorescence images are obtained by using a single-mode fiber as the second optical fiber 11 and allowing the end face 11b thereof to effectively function as a confocal pinhole. Instead of this, however, as shown in Fig. 7, a multi-mode fiber may be used as the second optical fiber 11 and a pinhole 39 with a variable aperture diameter may be provided at the end face thereof.

By disposing the pinhole 39 at the focal position of the coupling lens 25, it is disposed in conjugate positional relationship with respect to the image position of the objective lens 20. Therefore, by sufficiently stopping down the aperture diameter of the pinhole 39, it is possible to block out fluorescence returning from positions other than the image position in the specimen A, which enables high-resolution confocal fluorescence images to be obtained.

As the diameter of the aperture increases, the confocality decreases. Alternatively, however, it is possible to increase the fluorescence level incident on the photodetectors 15 to obtain brighter fluorescence images. Also, decreasing the confocality is advantageous in that it is possible to obtain fluorescence images at a greater depth with reduced resolution.

Furthermore, although laser light sources 6 are used as the light sources for emitting the excitation light, instead of this, it is possible to employ light sources formed by combining xenon lamps and excitation filters.

## Claims

1. A connection unit which is removably attached to an apparatus main body including an optical scanning section for scanning excitation light from a light source and an objective lens for imaging the excitation light scanned by the optical scanning section onto a specimen, the connection unit comprising:
a light-source optical fiber, removably connected to the light source, for conveying the excitation light from the light source;
a collimator lens for collimating the excitation light emitted from the light-source optical fiber to introduce the excitation light to the optical scanning section; and
a dichroic mirror for splitting off fluorescence, which is generated in the sample and which returns via the objective lens and the optical scanning section, from a light path of the excitation light and for directing the fluorescence to a photodetector,
wherein the light-source optical fiber, the collimator lens, and the dichroic mirror are secured to each other such that optical axes thereof are aligned.

2. A connection unit according to Claim 1, further comprising:
a photodetector optical fiber, removably connected to the photodetector, for conveying the fluorescence split off by the dichroic mirror to the photodetector; and
a coupling lens for focusing the fluorescence onto an end face of the photodetector optical fiber,
wherein the photodetector optical fiber and the coupling lens are secured to each other such that optical axes thereof are aligned with respect to the dichroic mirror.

3. A connection unit according to Claim 2, wherein:
a pinhole is disposed at a conjugate position with respect to an image position of the objective lens; and
the pinhole is secured such that an optical axis thereof is aligned with respect to the photodetector optical fiber.

4. A connection unit according to Claim 3, wherein:
the photodetector optical fiber is a multimode fiber; and
the pinhole diameter of the pinhole is capable of being adjusted.

5. A connection unit according to Claim 2, wherein the photodetector optical fiber includes, at the end that is fixed to the photodetector, a connector for enabling attachment and removal of the photodetector optical fiber.

6. A connection unit according to Claim 1, wherein the light-source optical fiber includes, at the end that is fixed to the light source, a connector for enabling attachment and removal of the light-source optical fiber.

7. An optical-scanning fluoroscopy apparatus comprising:
a light source;
an apparatus main body including an optical scanning section for scanning excitation light from the light source and an objective lens for imaging the excitation light scanned by the optical scanning section onto a specimen;
a photodetector for detecting fluorescence, which is generated in the specimen and which returns via the objective lens and the optical scanning section; and
a connection unit according to Claim 1, which is removable attached to the apparatus main body.
